# EUROPEAN PATENT SPECIFICATION

(11) **EP 3 753 839 B1**
(45) Date of publication and mention of the grant of the patent: **27.09.2023**
(21) Application number: 19796353.1
(22) Date of filing: 12.02.2019
(51) Int. Cl.: B63B 13/00, B63J 2/12, F01N 3/04

(54) **SEAWATER CIRCULATION SYSTEM HAVING SEAWATER SUPPLY FUNCTION AND SEAWATER STIRRING FUNCTION FOR EXHAUST GAS PROCESSING APPARATUS AND FOR COOLING OF HEATING ELEMENT**
MEERWASSERZIRKULATIONSSYSTEM MIT MEERWASSERVERSORGUNGSFUNKTION UND MEERWASSERRÜHRFUNKTION FÜR EINE ABGASBEHANDLUNGSVORRICHTUNG UND ZUR KÜHLUNG EINES HEIZELEMENTS
SYSTÈME DE CIRCULATION D'EAU DE MER AYANT UNE FONCTION D'ALIMENTATION EN EAU DE MER ET UNE FONCTION D'AGITATION D'EAU DE MER POUR UN APPAREIL DE TRAITEMENT DE GAZ D'ÉCHAPPEMENT ET POUR LE REFROIDISSEMENT D'UN ÉLÉMENT CHAUFFANT

(30) Priority: 04.05.2018 KR 20180051612
(43) Date of publication of application: 23.12.2020
(73) Proprietor: Seo, Min Su, Seoul 06373 (KR)
(72) Inventor: Seo, Min Su, Seoul 06373 (KR)
(74) Representative: Müller Verweyen
(86) International application number: PCT/KR2019/001674
(87) International publication number: WO 2019/212131

(56) References cited:
- JP-A- 2017 019 415
- KR-A- 20100 075 228
- KR-A- 20110 058 931
- KR-A- 20150 075 663
- KR-A- 20160 010 956

## Description

### [Technical Field]

The present invention relates to a seawater circulation system having a seawater supply function and a seawater stirring function for an exhaust gas processing apparatus and for cooling of a heat generation body, and more particularly, to a seawater circulation system capable of stirring and discharging seawater used to cool a heat generation body of a ship and seawater into which sulfur oxide is adsorbed in an exhaust gas processing apparatus.

### [Background Art]

Most ships in association with international voyage use a fuel oil called Bunker-C. Currently, a fuel oil including about 3.5 % of sulfur (hereinafter referred to as "high-sulfur ship oil") has been used in an international water area and areas other than a special emission control area.

Meanwhile, International Maritime Organization (IMO) has enacted legislation for regulating a degree of sulfur components contained in a ship fuel in order to prevent atmospheric warming and air pollution due to fine dust or the sulfur components that are harmful to a human body. As this regulation comes into effect and is enforced on January 1, 2020, shipowners are required to use a fuel oil containing 0.5 % or less of sulfur (hereinafter referred to as "low-sulfur ship oil"), which is much more expensive, without using a low-priced high-sulfur ship oil.

However, a low-sulfur ship oil is considerably more expensive than the high-sulfur ship oil, so that an economic burden is imposed on the shipowners. Therefore, in actual circumstances, the shipowner continues to use the high-sulfur ship oil, and installs a desulfurization exhaust gas processing apparatus (scrubber) in the ship to reduce a degree of sulfur contained in the fuel.

Meanwhile, since the exhaust gas processing apparatus is an apparatus that uses seawater, a sea chest for receiving the seawater is required, and it is inevitable to install a new overboard valve for discharging the seawater used in the exhaust gas processing apparatus. Moreover, since the above configurations have to be installed in a lower portion of the ship, which is submerged in water, the ship has to be brought out of the water and grounded on a dry dock of a shipyard in order to install the above configurations, so that an operation of the ship needs to be stopped for a considerable period (about four weeks).

In addition, strongly acidic high-temperature seawater that has passed through the exhaust gas processing apparatus adversely affects a marine ecosystem when discharged into the sea, so that in order to dilute the strongly acidic high-temperature seawater and lower a temperature of the strongly acidic high-temperature seawater, the ship additionally requires a separate dilution water pump and a separate generator for driving the dilution water pump.

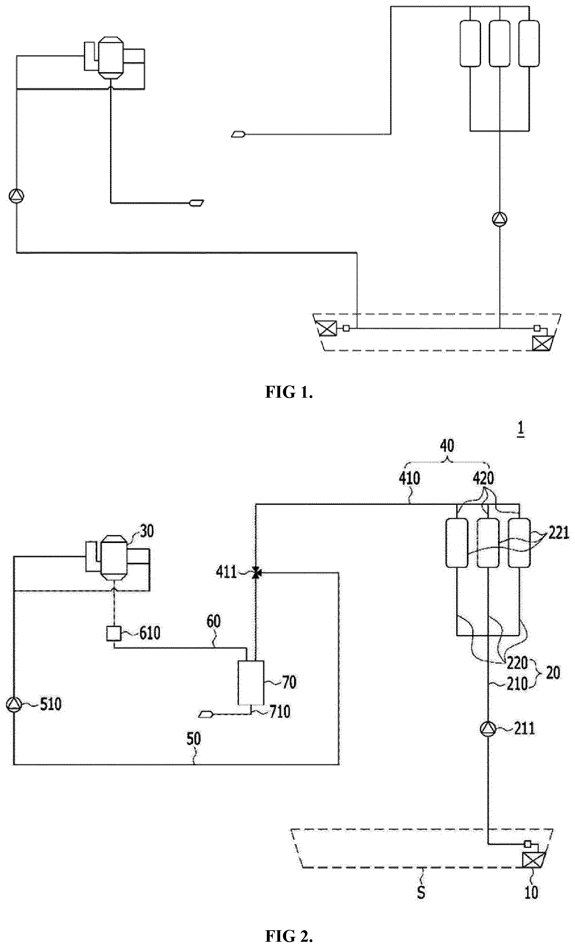

Meanwhile, the ship includes various heat generation bodies that generate heat while operating, such as an engine, a generator, a motor, an air conditioning system, and an air compressor. If the heat generated by the heat generation bodies is not lowered, the heat generation bodies may overheat to cause failure or fire. Accordingly, the ship uses a scheme of lowering the heat by supplying cooling water to the heat generation bodies. In order to ensure an enormous amount of cooling water, seawater pumped from a separate sea chest, which is different from the sea chest connected to the exhaust gas processing apparatus, is generally used as the cooling water (see FIG. 1).

In other words, the ship requires at least two sea chests, so that a proportion of the sea chest in the ship is increased, which causes an available space in the ship to be reduced.

Therefore, there is a demand for a seawater circulation system capable of removing sulfur oxide in the exhaust gas processing apparatus by supplying seawater, which has been used or is to be used as the cooling water in the heat generation body that requires much seawater in the ship, into the exhaust gas processing apparatus without installing a sea chest and a discharge pipe for the heat generation body and the exhaust gas processing apparatus to supply the seawater to the heat generation body and the exhaust gas processing apparatus, and capable of lowering acidity and the temperature of the seawater and discharging the seawater without the separate dilution water pump by mixing highly acidic seawater discharged from the exhaust gas processing apparatus with the cooling water of the heat generation body.

KR 2015 0075663 A discloses a seawater circulation system according to the preamble of claim 1.

KR 2016 0010956 A, KR 2011 0058931 A, KR 2010 0075228 A and JP 2017 019415 A disclose further seawater circulation systems.

### [Disclosure]

### [Technical Problem]

A technical object to be achieved by the present invention is to provide a seawater circulation system capable of removing sulfur oxide in an exhaust gas processing apparatus and lowering a temperature of a heat generation body through one sea chest and one discharge pipe, which are previously installed, without additionally installing a separate sea chest, and capable of lowering acidity and a temperature of seawater and discharging the seawater without a separate dilution water pump.

The technical objects to be achieved by the present invention are not limited to the above-described technical objects, and other technical objects that are not described above will be clearly understood by a person having ordinary skill in the art to which the invention pertains from the following description.

### [Technical Solution]

To achieve the objects described above, according to one embodiment of the present invention, there is provided a seawater circulation system including: a sea chest for pumping seawater from sea; a cooling part coupled to the sea chest to receive the seawater from the sea chest, and coupled to a heat generation body to lower a temperature of the heat generation body through heat exchange; a scrubber part for processing an exhaust gas generated in a ship; a first discharge pipe part coupled to the cooling part to receive the seawater discharged from the cooling part; a supply pipe part having one end coupled to the cooling part or the first discharge pipe part and an opposite end coupled to the scrubber part, and configured to supply a part or all of the seawater, which is discharged from a pipe connected to the one end of the supply pipe part, to the scrubber part; a second discharge pipe part coupled to the scrubber part to receive the seawater discharged from the scrubber part; and a stirring part coupled to the first discharge pipe part and the second discharge pipe part to receive and stir the seawater discharged from the first discharge pipe part and the second discharge pipe part.

According to one embodiment of the present invention, a valve for adjusting a flow rate may be provided between the cooling part or the first discharge pipe part and the supply pipe part.

According to one embodiment of the present invention, the cooling part may include a first pump for pumping the seawater from the sea chest, and the supply pipe part may include a second pump for pumping the seawater from the first discharge pipe part.

According to one embodiment of the present invention, the heat generation body may include at least one of an oil cooler, an air cooler, and an engine coolant cooler.

According to one embodiment of the present invention, the supply pipe part may be coupled to the cooling part located between the first pump and the heat generation body, or coupled to the cooling part located between the first pump and the sea chest.

### [Advantageous Effects]

According to an embodiment of the present invention, since the seawater is supplied to the heat generation body as cooling water, and the seawater supplied to the heat generation body is recovered so as to be used for removing sulfur oxide in the scrubber part, a sufficient amount of water can be supplied to the heat generation body and the scrubber part even with one sea chest, so that an installation cost of the sea chest can be saved, and space utilization can be increased.

In addition, according to one embodiment of the present invention, the acidity of the seawater discharged from the scrubber part is lowered by using the seawater discharged from the cooling part without a separate dilution water pump, so that an installation cost of the dilution water pump can be saved, and the space utilization can be increased.

It should be understood that effects of the present invention are not limited to the above-described effects and include all effects that can be inferred from the configuration of the invention disclosed in the detailed description or the claims of the present disclosure.

### [Description of Drawings]

FIG. 1 is a view showing a conventional seawater circulation system.
FIG. 2 is a view showing a seawater circulation system according to a first embodiment of the present invention.
FIG. 3 is a view showing a seawater circulation system according to a second embodiment of the present invention.
FIG. 4 is a view showing a seawater circulation system according to a third embodiment of the present invention.

### [Mode for Invention]

### [Best Mode]

Hereinafter, the present invention will be described with reference to the accompanying drawings. However, the present invention may be implemented in various other forms, and thus is not limited to the embodiments described herein. In addition, in the drawings, portions irrelevant to the description will be omitted in order to clearly describe the present invention, and like reference numerals refer to like elements throughout the specification.

Throughout the specification, when one element is described as being "connected (accessed, contacted, or coupled)" to another element, it shall be construed as being not only "directly connected" to the other element, but also "indirectly connected" to the other element with another member in between. In addition, when some part "includes" some elements, unless specifically described to the contrary, it means that other elements may be further included but not excluded.

The terms used herein are intended to describe certain embodiments only, and shall by no means limit the present invention. Unless the context clearly indicates otherwise, expressions in a singular form include a meaning of a plural form. In the present specification, the term such as "comprising" or "including" is intended to designate the presence of characteristics, numbers, steps, operations, elements, components, or combinations thereof disclosed herein, and shall not be construed to preclude any possibility of the presence or addition of one or more other characteristics, numbers, steps, operations, elements, components, or combinations thereof.

Hereinafter, embodiments of the present invention will be described in detail with reference to the accompanying drawings.

FIG. 2 is a view showing a seawater circulation system 1 according to a first embodiment of the present invention.

According to one embodiment of the present invention, a seawater circulation system 1 may include a sea chest 10, a cooling part 20, a scrubber part 30, a first discharge pipe part 40, a supply pipe part 50, a second discharge pipe part 60, and a stirring part 70.

The sea chest 10 refers to a component for intake of cooling water and water required for a ship S, and may be coupled to a lower portion of the ship S to draw seawater from sea.

The cooling part 20 refers to a component for supplying the cooling water to a heat generation body 221, and may be coupled to the sea chest 10 to receive the seawater from the sea chest 10. In this case, the cooling part 20 may include a first pump 211 for pumping the seawater from the sea chest 10. A pumping flow rate of the first pump 211 may be 650 to 750 m³/h.

In addition, the cooling part 20 may be coupled to an inside or an outside of the heat generation body 221 so that heat may be exchanged between the heat generation body 221 and the seawater, and may be formed of a thermally conductive material for smooth heat exchange.

The cooling part 20 may have a tubular shape. When a plurality of heat generation bodies 221 are provided, the cooling part 20 may branch to correspond to the number of heat generation bodies 221 so as to be coupled to the heat generation bodies 221, respectively. In other words, the cooling part 20 may include one main pipe 210 coupled to the sea chest, and one or more branch pipes 220 that branch from the main pipe 210 to correspond to the number of heat generation bodies 221. In this case, the first pump 211 may be coupled to the main pipe 210 to easily transport the seawater to each of the branch pipes 220. Meanwhile, a flow path of the main pipe 210 may be wider than a flow path of the branch pipe 220 to facilitate a flow of the seawater.

Meanwhile, the heat generation body 221 may be at least one of an oil cooler, an air cooler, and an engine coolant cooler.

The scrubber part 30 refers to a component for removing sulfur oxide included in an exhaust gas, and may be coupled to an exhaust gas discharge part of an internal combustion engine such as an engine of a ship to receive the exhaust gas from the internal combustion engine. In this case, the scrubber part 30 may include a liquid dispersion part (not shown) and a particle collection part (not shown).

The first discharge pipe part 40 refers to a component for receiving the seawater discharged from the cooling part 20, may be formed therein with a flow path communicating with a flow path of the cooling part 20, and may have one end coupled to the cooling part 20 and an opposite end coupled to the stirring part 70.

In this case, when a plurality of heat generation bodies 221 are provided, the first discharge pipe part 40 may include a main pipe 410, and a branch pipe 420 that branches from the main pipe 410. The branch pipe 420 may branch to correspond to the number of heat generation bodies 221 so as to be coupled to the branch pipes 220 of the cooling part 20, respectively. Meanwhile, a flow path of the main pipe 410 may be wider than a flow path of the branch pipe 420 to facilitate the flow of the seawater.

The supply pipe part 50 refers to a component for supplying a part or all of the seawater discharged from the first discharge pipe part 40 to the scrubber part 30, and may be formed therein with a flow path communicating with the flow path of the first discharge pipe part 40. In other words, the supply pipe part 50 may have one end coupled to the first discharge pipe part 40 located between the cooling part 20 and the stirring part 70, and an opposite end coupled to the scrubber part 30.

In this case, a valve 411 for adjusting a flow rate may be provided at the one end of the supply pipe part 50, that is, a position between the supply pipe part 50 and the first discharge pipe part 40. Depending on a state of the valve 411, the flow path of the first discharge pipe part 40 or the communication between the supply pipe part 50 and the first discharge pipe part 40 may be opened or blocked. In other words, the valve 411 may be a three-way valve (3-way valve) for performing a function of blocking the flow path of the first discharge pipe part 40 as well as blocking the communication between the supply pipe part 50 and the first discharge pipe part 40.

According to one embodiment of the present invention, the supply pipe part 50 may include a second pump 510 for pumping the seawater from the first discharge pipe part 40. A ratio of a pumping flow rate of the second pump 510 to a pumping flow rate of the first pump 211 may be set to 0.42 to 0.44:1. For example, when the ratio of the pumping flow rate of the second pump 510 to the pumping flow rate of the first pump 211 is set to 0.428:1, the pumping flow rate of the second pump 510 may be about 250 to 350 m³/h. In this case, the ratio of the pumping flow rate of the second pump 510 to the pumping flow rate of the first pump 211 may have a value in consideration of acidity and a temperature of the seawater that passes through the stirring part 70 so as to be discharged to an outside.

The second discharge pipe part 60 refers to a component for receiving the seawater discharged from the scrubber part 30, may be formed therein with a flow path communicating with the scrubber part 30, and may have one end coupled to the scrubber part 30 and an opposite end coupled to the stirring part 70.

In this case, a separation part 610 for removing contaminants included in the seawater discharged from the scrubber part 30 may be coupled to the second discharge pipe part 60. When the separation part 610 is coupled to the stirring part 70, the seawater discharged from the first discharge pipe part 40, which does not include the contaminants, may also be introduced into the separation part 610, so that the separation part 610 is required to have a large capacity. In other words, according to the present invention, only the seawater discharged from the second discharge pipe part 60, which substantially includes the contaminants, needs to be processed, so that the separation part 610 may have a small capacity.

The stirring part 70 refers to a component for stirring the seawater discharged from the first discharge pipe part 40 and the second discharge pipe part 60, may be formed therein with a stirring space for stirring the seawater, and a stirring member for rotating the seawater located in the stirring space, and may have one surface coupled to the first discharge pipe part 40 and the second discharge pipe part 60 so as to allow the first discharge pipe part 40 and the second discharge pipe part 60 to communicate with the stirring space. In addition, the stirring part 70 may have an opposite surface coupled to a third discharge pipe part 710 for discharging the seawater to the outside. In other words, the third discharge pipe part 710 may receive the seawater from the stirring part 70 to discharge the received seawater to the outside.

Since the seawater discharged from the third discharge pipe part 710 has low acidity, the third discharge pipe part 710 does not need to be formed of a material resistant to corrosion.

According to the present invention, the seawater discharged from the second discharge pipe part 60 and the seawater discharged from the first discharge pipe part 40 are stirred by the stirring part 70 and discharged to the outside, so that the acidity and the temperature of the seawater discharged from the second discharge pipe part 60 can be lowered without a separate dilution water pump.

Meanwhile, the scrubber part 30, the second discharge pipe part 60, and the stirring part 70 may be formed of a material resistant to acid corrosion so as to prevent corrosion caused by strongly acidic seawater. However, the third discharge pipe part 710 does not need to be formed of the material resistant to the acid corrosion because the seawater having the low acidity is discharged through the third discharge pipe part 710. In other words, a process of manufacturing the seawater circulation system 1 may be simplified, and a manufacturing cost of the seawater circulation system 1 may be reduced.

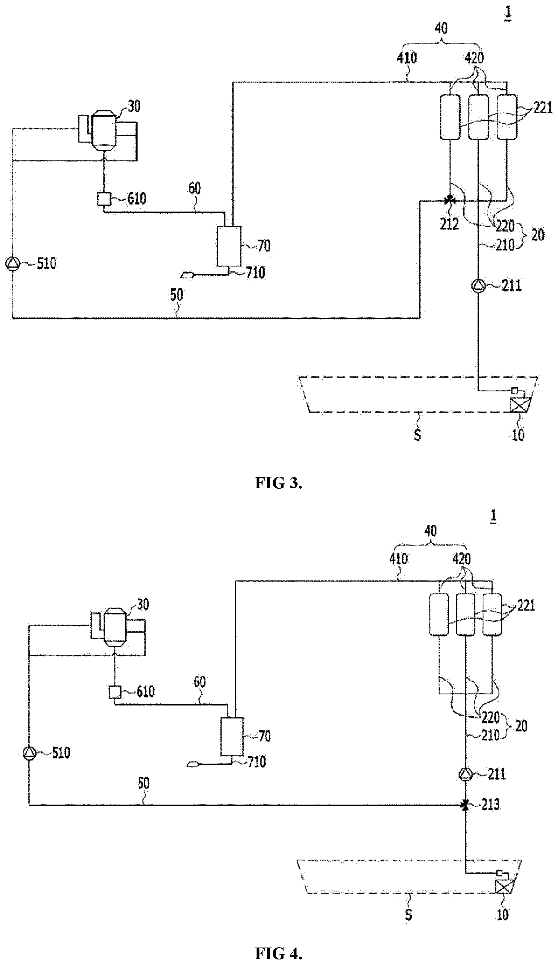

FIG. 3 is a view showing a seawater circulation system 1 according to a second embodiment of the present invention. Prior to the full description of FIG. 3, components that are identical to the components of the first embodiment of the present invention will be denoted by the same reference numerals, and the descriptions thereof will be omitted.

A difference between the second embodiment and the first embodiment is a coupling position of the supply pipe part 50. According to the second embodiment, the supply pipe part 50 may have one end coupled to the cooling part 20 located between the first pump 211 and the heat generation body 221. In this case, a valve 212 for adjusting a flow rate may be provided between the cooling part 20 and the supply pipe part 50. Depending on a state of the valve 212, the communication between the cooling part 20 and the supply pipe part 50 may be opened or blocked. In other words, the valve 212 may be a three-way valve (3-way valve) for performing a function of blocking the flow path of the cooling part 20 as well as blocking the communication between the cooling part 20 and the supply pipe part 50.

Meanwhile, although the one end of the supply pipe part 50 has been shown in FIG. 3 as being coupled to one of the branch pipes 220 located before the heat generation body 221, embodiments are not limited thereto, and the one end of the supply pipe part 50 may be coupled to the main pipe 210 located between the first pump 211 and the branch pipe 220. In this case, the first pump 211 may be a centrifugal pump.

According to the present invention, the second pump 510 may recover a part of the seawater, which is to be used as the cooling water in the heat generation body 221, by using characteristics of the centrifugal pump (a property of pumping more water when a back pressure of an outlet of the pump is lowered) so as to use the recovered seawater to remove the sulfur oxide in the scrubber part 30, so that two sea chests are not required.

In other words, according to the present invention, an available space of the ship S can be widened. Moreover, a conventional circulation system includes a pump that has to be installed in a lower portion of an engine room, which is always submerged in water, to supply the water to a scrubber part, so that the pump has to be installed near a surface of the water instead of the lower portion of the engine room when an installation space is insufficient. However, the second pump 510 according to the present invention may be mounted in a place where the installation is convenient in the vicinity of a heat generation body-cooling cooler.

FIG. 4 is a view showing a seawater circulation system 1 according to a third embodiment of the present invention. Prior to the full description of FIG. 4, components that are identical to the components of the second embodiment of the present invention will be denoted by the same reference numerals, and the descriptions thereof will be omitted.

A difference between the second embodiment and the third embodiment is a coupling position of the supply pipe part 50. According to the seawater circulation system 1 of the third embodiment, the supply pipe part 50 may be coupled to the cooling part 20 located between the first pump 211 and the sea chest 10. In this case, a valve 213 for adjusting a flow rate may be provided between the cooling part 20 and the supply pipe part 50.

Depending on a state of the valve 213, the communication between the cooling part 20 and the supply pipe part 50 may be opened or blocked.

According to the seawater circulation system 1 of the third embodiment, the second pump 510 may pump a part of the seawater supplied from the sea chest 10 to remove the sulfur oxide in the scrubber part 30, so that two sea chests are not required. In this case, a capacity of the second pump 510 is preferably smaller than a capacity of the first pump 211.

As described above, according to the present invention, the acidity and the temperature of the seawater discharged to the outside are lowered, so that damage to a marine ecosystem caused by strongly acidic high-temperature seawater can be minimized.

The above description of the present invention has been provided for illustrative purposes only, and it is to be understood by a person having ordinary skill in the art to which the invention pertains that the present invention can be easily embodied in other specific forms without changing the technical idea or essential properties of the present invention. Therefore, the embodiments described above are illustrative in all aspects, and should not be construed as limiting. For example, each element described as a single type may be implemented in a distributed manner, and similarly, elements described as being distributed may be implemented in a coupled manner.

The scope of the present invention is defined by the appended claims, and should be construed as encompassing all changes or modifications conceived from the meaning, scope, and equivalent concepts of the claims.

## Claims

1. A seawater circulation system (1) comprising:
a sea chest (10) for pumping seawater from sea;
a cooling part (20) coupled to the sea chest (10) to receive the seawater from the sea chest (10), and coupled to a heat generation body (221) to lower a temperature of the heat generation body (221) through heat exchange;
a scrubber part (30) for processing an exhaust gas generated in a ship;
a first discharge pipe part (40) coupled to the cooling part (20) to receive the seawater discharged from the cooling part (20);
a supply pipe part (50) having one end coupled to the cooling part (20) or the first discharge pipe part (40) and an opposite end coupled to the scrubber part (30), and configured to supply a part or all of the seawater, which is discharged from a pipe connected to the one end of the supply pipe part (50), to the scrubber part (30);
a second discharge pipe part (60) coupled to the scrubber part (30) to receive the seawater discharged from the scrubber part (30);
the cooling part (20) includes a first pump (211) for pumping the seawater from the sea chest (10),
the supply pipe part (50) includes a second pump (510) for pumping the seawater from the cooling part (20) or the first discharge pipe part (40), and
the second pump (510) is installed adjacent to the scrubber part (30), and configured to receive the seawater from the cooling part (20) or the first discharge pipe part (40), to which the seawater pumped by the first pump (211) is supplied, **characterized in that**
the seawater circulation system (1) comprises a stirring part (70) coupled to the first discharge pipe part (40) and the second discharge pipe part (60) to receive and stir the seawater discharged from the first discharge pipe part (40) and the second discharge pipe part (60),
wherein a valve (411) for adjusting a flow rate is provided between the cooling part (20) or the first discharge pipe part (40) and the supply pipe part (50),
and that a ratio of a pumping flow rate of the second pump (510) to a pumping flow rate of the first pump (211) is set from 0.42 to 0.44.

2. The seawater circulation system (1) of claim 1, wherein the heat generation body (221) includes at least one of an oil cooler, an air cooler, and an engine coolant cooler.

3. The seawater circulation system (1) of claim 1, wherein the supply pipe part (50) is coupled to the cooling part (20) located between the first pump (211) and the heat generation body (221).

## Patentansprüche

1. Ein Meerwasser-Zirkulationssystem (1), umfassend:
einen Meerwasserbehälter (10) zum Pumpen von Meerwasser aus dem Meer;
ein Kühlteil (20), das mit dem Meerwasserbehälter (10) verbunden ist, um das Meerwasser aus dem Meerwasserbehälter (10) aufzunehmen, und das mit einem Wärmeerzeugungskörper (221) verbunden ist, um eine Temperatur des Wärmeerzeugungskörpers (221) durch Wärmeaustausch zu senken;
ein Wäscherteil (30) zur Verarbeitung eines in einem Schiff erzeugten Abgases;
ein erstes Auslassleitungsteil (40), das mit dem Kühlteil (20) verbunden ist, um das aus dem Kühlteil (20) ausgelassene Meerwasser aufzunehmen;
ein Zufuhrleitungsteil (50), dessen eines Ende mit dem Kühlteil (20) oder dem ersten Auslassleitungsteil (40) verbunden ist und dessen gegenüberliegendes Ende mit dem Wäscherteil (30) verbunden ist, und das so eingerichtet ist, dass es einen Teil oder das gesamte Meerwasser, das aus einem mit dem einen Ende des Zufuhrleitungsteils (50) verbundenen Leitung abgeleitet wird, dem Wäscherteil (30) zuführt;
ein zweites Auslassleitungsteil (60), das mit dem Wäscherteil (30) verbunden ist, um das aus dem Wäscherteil (30) ausgelassene Meerwasser aufzunehmen;
das Kühlteil (20) eine erste Pumpe (211) zum Abpumpen des Meerwassers aus dem Meerwasserbehälter (10) umfasst,
der Zufuhrleitungsteil (50) eine zweite Pumpe (510) zum Pumpen des Meerwassers aus dem Kühlteil (20) oder dem ersten Auslassleitungsteil (40) umfasst, und
die zweite Pumpe (510) angrenzend an den Wäscherteil (30) installiert und eingerichtet ist, um das Meerwasser aus dem Kühlteil (20) oder dem ersten Auslassleitungsteil (40) aufzunehmen, dem das von der ersten Pumpe (211) gepumpte Meerwasser zugeführt wird, **dadurch gekennzeichnet, dass** das Meerwasser-Zirkulationssystem (1) ein Rührteil (70) umfasst, das mit dem ersten Auslassleitungsteil (40) und dem zweiten Auslassleitungsteil (60) verbunden ist, um das aus dem ersten Auslassleitungsteil (40) und dem zweiten Auslassleitungsteil (60) ausgegebene Meerwasser aufzunehmen und zu rühren,
wobei ein Ventil (411) zum Einstellen einer Durchflussrate zwischen dem Kühlteil (20) oder dem ersten Auslassleitungsteil (40) und dem Zufuhrleitungsteil (50) vorgesehen ist,
und dass ein Verhältnis einer Pumpendurchflussrate der zweiten Pumpe (510) zu einer Pumpendurchflussrate der ersten Pumpe (211) von 0,42 bis 0,44 eingestellt ist.

2. Das Meerwasser-Zirkulationssystem (1) nach Anspruch 1, wobei der Wärmeerzeugungskörper (221) mindestens einen der folgenden Kühler umfasst: einen Ölkühler, einen Luftkühler und einen Motorkühlmittelkühler.

3. Das Meerwasser-Zirkulationssystem (1) nach Anspruch 1, wobei das Zufuhrleitungsteil (50) mit dem Kühlteil (20) verbunden ist, das sich zwischen der ersten Pumpe (211) und dem Wärmeerzeugungskörper (221) befindet.

## Revendications

1. Un système de circulation d'eau de mer (1) comprenant :
un caisson d'eau de mer (10) pour pomper l'eau de mer de la mer ;
une partie de refroidissement (20) couplée au caisson d'eau de mer (10) pour recevoir l'eau de mer du caisson d'eau de mer (10) et couplée à un corps de génération de chaleur (221) pour abaisser une température du corps de génération de chaleur (221) par échange de chaleur ;
une partie épurateur (30) pour traiter un gaz d'échappement généré dans un navire ;
une première partie tuyau d'évacuation (40) couplée à la partie de refroidissement (20) pour recevoir l'eau de mer évacuée de la partie de refroidissement (20) ;
une partie tuyau d'alimentation (50) ayant une extrémité couplée à la partie de refroidissement (20) ou à la première partie tuyau d'évacuation (40) et une extrémité opposée couplée à la partie épurateur (30) et configurée pour fournir une partie ou la totalité de l'eau de mer, qui est évacuée d'un tuyau relié à l'une des extrémités de la partie tuyau d'alimentation (50), à la partie épurateur (30) ;
une seconde partie tuyau d'évacuation (60) couplée à la partie épurateur (30) pour recevoir l'eau de mer évacuée de la partie épurateur (30) ;
la partie de refroidissement (20) comporte une première pompe (211) pour pomper l'eau de mer du caisson d'eau de mer (10),
la partie tuyau d'alimentation (50) comporte une seconde pompe (510) pour pomper l'eau de mer à partir de la partie de refroidissement (20) ou de la première partie tuyau d'évacuation (40), et
la seconde pompe (510) est installée de manière adjacente à la partie épurateur (30) et configurée pour recevoir l'eau de mer de la partie de refroidissement (20) ou de la première partie tuyau d'évacuation (40), à laquelle l'eau de mer pompée par la première pompe (211) est fournie,
**caractérisé en ce que**
le système de circulation d'eau de mer (1) comprend une partie d'agitation (70) couplée à la première partie tuyau d'évacuation (40) et à la seconde partie tuyau d'évacuation (60) pour recevoir et agiter l'eau de mer évacuée de la première partie tuyau d'évacuation (40) et de la seconde partie tuyau d'évacuation (60),
dans lequel une vanne (411) pour régler un débit est prévue entre la partie de refroidissement (20) ou la première partie tuyau d'évacuation (40) et la partie tuyau d'alimentation (50),
et un rapport entre un débit de pompage de la seconde pompe (510) et un débit de pompage de la première pompe (211) est fixé entre 0,42 à 0,44.

2. Le système de circulation d'eau de mer (1) selon la revendication 1, dans lequel le corps de génération de chaleur (221) comprend au moins un d'un refroidisseur d'huile, d'un refroidisseur d'air et d'un refroidisseur de liquide de refroidissement de moteur.

3. Le système de circulation d'eau de mer (1) selon la revendication 1, dans lequel la partie tuyau d'alimentation (50) est couplée à la partie de refroidissement (20) située entre la première pompe (211) et le corps de génération de chaleur (221).
